# FASCICULE DE BREVET EUROPEEN

(11) **EP 2 554 399 B1**
(45) Date de publication et mention de la délivrance du brevet: **23.07.2014**
(21) Numéro de dépôt: 12179275.8
(22) Date de dépôt: 03.08.2012
(51) Int. Cl.: B60B 17/00

(54) **Dispositif d'amortissement du bruit de crissement d'une roue métallique en contact avec une surface de roulement métallique.**
Vorrichtung zur Dämpfung des Knirschgeräusches eines Metallrads auf einer metallischen Rolloberfläche
Device for damping the squealing noise of a metal wheel in contact with a metal running surface

(30) Priorité: 03.08.2011 FR 1157107
(43) Date de publication de la demande: 06.02.2013
(73) Titulaire: Valdunes, 59125 Trith Saint Leger (FR)
(72) Inventeur: Demilly, François, Guy, Jean, 59130 Lambersart (FR); Ghewy, Franck, 59530 Le Quesnoy (FR)
(74) Mandataire: Domenego, Bertrand

(56) Documents cités:
- EP-A1- 0 050 049
- EP-A1- 0 633 149
- CN-U- 201 494 248
- DE-A1- 3 120 068
- DE-A1- 19 542 342
- DE-C1- 3 316 759

## Description

La présente invention concerne un dispositif d'amortissement du bruit de crissement d'une roue métallique en contact avec une surface de roulement métallique, notamment dans le cas des roues de véhicules ferroviaires.

Le bruit de crissement d'une roue métallique est généré lors du passage dans des courbes serrées, et est causé principalement par trois mécanismes d'excitation, qui sont :
- le frottement longitudinal des roues sur la surface de roulement,
- le frottement de la face active du boudin de la roue contre la surface de roulement, et
- le glissement latéral des roues au niveau de la surface de contact lié à l'angle de dérive de l'axe de roue par rapport à l'axe du rail.

Le troisième mécanisme d'excitation est celui qui est prépondérant dans le bruit de crissement même si les deux premiers jouent un rôle complémentaire.

Dans le cas des véhicules ferroviaires, les forces de glissement jouent un rôle important dans le guidage et la stabilité du bogie. Le profil de la roue étant conique, un glissement longitudinal apparaît lorsque les deux roues d'un même axe roulent selon des rayons différents. Ce glissement génère au niveau du contact des efforts venant exciter les modes propres de la roue et dépend du coefficient de friction.

Dans le but d'améliorer le confort acoustique et la protection de l'environnement et des usagers, les constructeurs de roues métalliques ont été amenés à mettre en place des solutions visant à réduire les émissions acoustiques.

Une solution connue consiste à insérer un jonc métallique dans une gorge usinée sur la face interne de la jante de la roue. Le jonc métallique est soudé dans la gorge correspondante. Mais, cette solution ne donne pas entièrement satisfaction car même si des atténuations sonores moyennes de l'ordre de 10 décibels peuvent être obtenues, l'efficacité peut fortement varier entre les roues d'un même type et d'une application à l'autre.

De plus, la problématique de l'apparition du bruit et de son atténuation demeure complexe et aléatoire en raison ;
- des nombreuses interactions mises en jeu de l'ordre mécanique, thermique et acoustique par exemple,
- de la difficulté à définir la source d'excitation,
- de la complexité à définir la réponse acoustique des différents éléments vibrants qui dépend fortement de l'environnement.

DE 31 20 068 décrit une roue de véhicule ferroviaire comprenant un élément d'insonorisation formé d'anneaux métalliques et d'anneaux en matière plastique alternés, et un système de serrage de l'élément d'insonorisation dans une gorge de la roue.

EP 0 050 049 décrit un dispositif d'amortissement des vibrations pour une roue de véhicule ferroviaire.

L'invention a pour but de proposer un dispositif d'amortissement du bruit de crissement d'une roue métallique qui permet d'améliorer l'efficacité de l'atténuation de ce bruit et surtout d'optimiser les performances selon les types de roues.

L'invention a donc pour objet un dispositif d'amortissement du bruit de crissement d'une roue métallique en contact avec une surface de roulement métallique, du type comprenant au moins un jonc métallique monté dans une gorge ménagée dans le rayon intérieur de la jante de la roue, **caractérisé en ce que** ledit au moins un jonc métallique comporte deux extrémités libres et opposées, reliées entre elles par un système de serrage réglable dudit au moins un jonc dans la gorge correspondante pour assurer un couplage mécanique déterminé entre ce jonc et la roue.

Selon d'autres caractéristiques de l'invention :
- le jonc est monobloc ;
- le jonc comprend un premier trou borgne et un deuxième trou borgne formés dans le corps du jonc dans des faces en regard des extrémités libres du jonc ;
- le système de serrage comprend une tige dont une extrémité est insérée dans le premier trou borgne et l'autre extrémité est insérée dans le deuxième trou borgne ;
- le jonc présente exactement deux extrémités libres ;
- la section transversale du jonc a un contour extérieur dont au moins une portion est en arc de cercle ;
- le jonc présente une forme en arc de cercle s'étendant sur au moins 300°, en particulier sur au moins 330°;
- le système de serrage comprend des moyens de mise en précontrainte dudit au moins un jonc et des moyens de blocage de ce jonc dans la gorge,
- la tige est une tige filetée ;
- les moyens de mise en précontrainte comprennent un écrou vissé sur une première extrémité de la tige filetée et destiné à coopérer avec une extrémité du jonc,
- les moyens de blocage comprennent un contre-écrou vissé sur ladite tige filetée et une goupille de blocage dudit contre-écrou dans une position appliquée contre ledit écrou,
- les moyens de mise en précontrainte comprennent un écrou vissé sur une première extrémité de la tige filetée et au moins une rondelle élastique interposée entre ladite extrémité du jonc et ledit écrou,
- les moyens de blocage comprennent un contre-écrou libre en rotation vissé sur la tige filetée et au moins une rondelle élastique interposée entre ledit contre-écrou et l'écrou,
- un matériau visco-élastique est déposé dans le fond de la gorge du jonc,
- le jonc présente une section circulaire,
- le jonc comporte, sur son pourtour extérieur, une surface sensiblement plane destinée à être insérée dans la gorge correspondante, et
- la surface plane comporte un rebord en saillie.

Les caractéristiques et avantages de l'invention apparaîtront au cours de la description qui va suivre, donnée à titre d'exemple et faite en référence aux dessins annexés, sur lesquels :
- la Fig. 1 est une vue en perspective d'une roue métallique équipée d'un dispositif d'amortissement, conforme à l'invention,
- la Fig. 2 est une vue partielle et en coupe transversale du bandage de la roue équipé du dispositif d'amortissement, selon un premier mode de réalisation,
- la Fig. 3 est une vue partielle et en coupe transversale du bandage de la roue équipé du dispositif d'amortissement, selon un second mode de réalisation,
- la Fig. 4 est une vue en élévation d'un jonc du dispositif d'amortissement,
- la Fig. 5 est une vue schématique en coupe longitudinale des deux extrémités libres du jonc avec des moyens de mise en précontrainte et de blocage, selon un premier mode de réalisation,
- la Fig. 6 est une vue schématique en coupe longitudinale des deux extrémités libres du jonc avec des moyens de mise en précontrainte et de blocage selon un second mode de réalisation, et
- la Fig. 7 est une vue schématique en perspective d'une variante du jonc du dispositif d'amortissement.

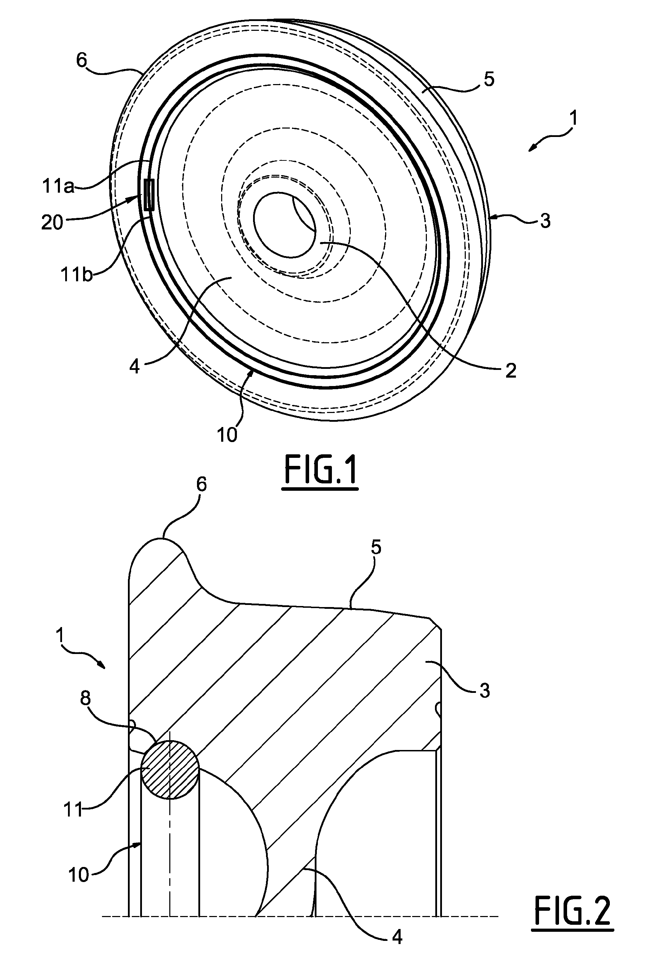

Sur la Fig. 1, on a représenté une roue métallique désignée dans son ensemble par la référence 1, comme par exemple une roue de véhicule ferroviaire. Cette roue 1 est destinée à se déplacer sur une surface de roulement métallique, non représentée, comme par exemple un rail.

De manière classique, la roue 1 comporte un moyeu 2 relié à une jante 3 par une toile 4. La jante 3 comporte, sur sa face externe, une table de roulement 5 et un boudin 6.

La roue 1 est équipée d'un dispositif d'amortissement 10 du bruit de crissement qui se produit généralement lors du passage dans des courbes serrées, du fait, entre autres, du glissement latéral des roues au niveau de la surface de contact lié à l'angle de dérive de l'axe de roue par rapport à l'axe du rail.

Le dispositif 10 comprend au moins un jonc métallique 11 monté dans une gorge 8 ménagée sur le rayon intérieur de la jante 3.

Avantageusement, le jonc 11 est monobloc. Il est formé d'une seule pièce dans un matériau métallique.

Selon un premier mode de réalisation représenté à la Fig. 2, le dispositif 10 comporte un jonc 11 placé dans une gorge 8 du côté interne de la roue 1.

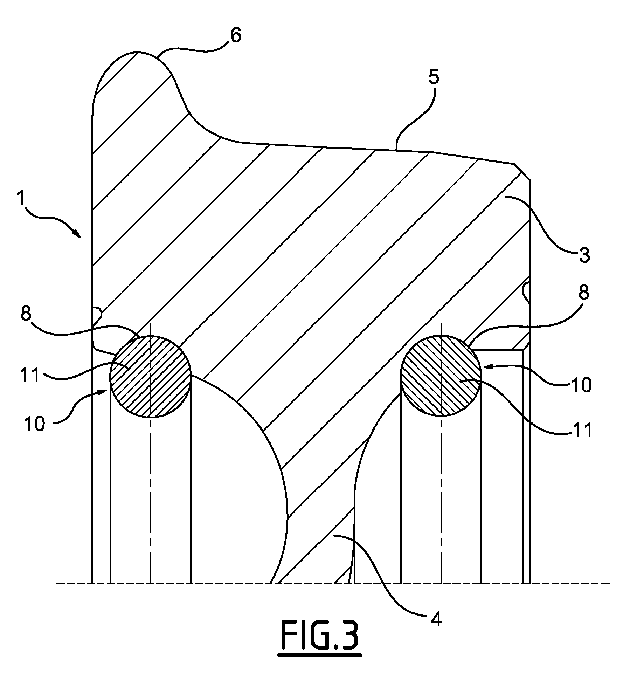

Selon un second mode de réalisation représenté à la Fig. 3, le dispositif comporte deux joncs 11 placés chacun dans une gorge 8 de part et d'autre de la toile 4.

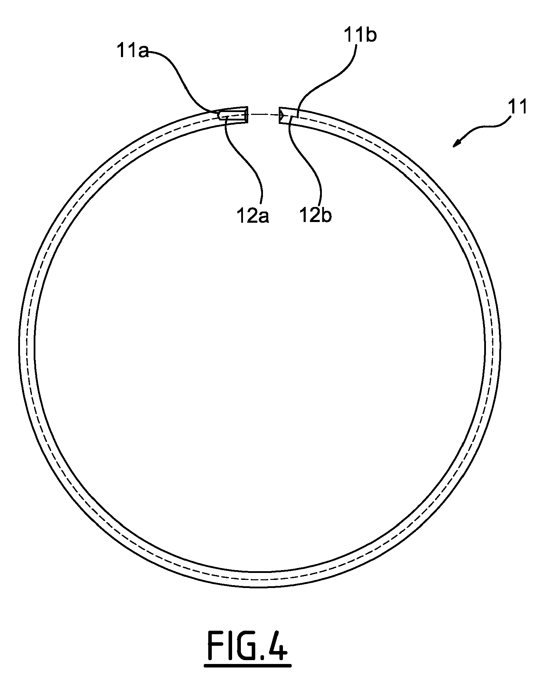

Le jonc 11 est cintré, comme montré à la Fig. 4, et comporte deux extrémités libres et opposées, respectivement 11a et 11b.

En particulier, le jonc 11 présente une forme en arc de cercle s'étendant sur au moins 300°.

En particulier, le jonc 11 présente exactement deux extrémités libres 11a et 11b.

Les faces de ces extrémités 11a et 11b sont parallèles et chaque extrémité 11a et 11b est percée d'un trou borgne, respectivement 12a et 12b.

Avantageusement, le jonc 11 comprend deux trous borgnes 12a et 12b formés dans le corps du jonc 11 dans des faces en regard des extrémités libres 11a et 11b.

D'une manière générale, les deux extrémités libres 11a et 11b du jonc 11 sont reliées entre elles par un système de serrage 20 réglable de ce jonc 11 dans la gorge 8 correspondante pour assurer un couplage mécanique déterminé entre ce jonc 11 et la roue 1.

En particulier, le système de serrage 20 comprend une tige 21 dont une extrémité 21 a est insérée dans un premier trou borgne 12a et l'autre extrémité 21 b est insérée dans le deuxième trou borgne 12b.

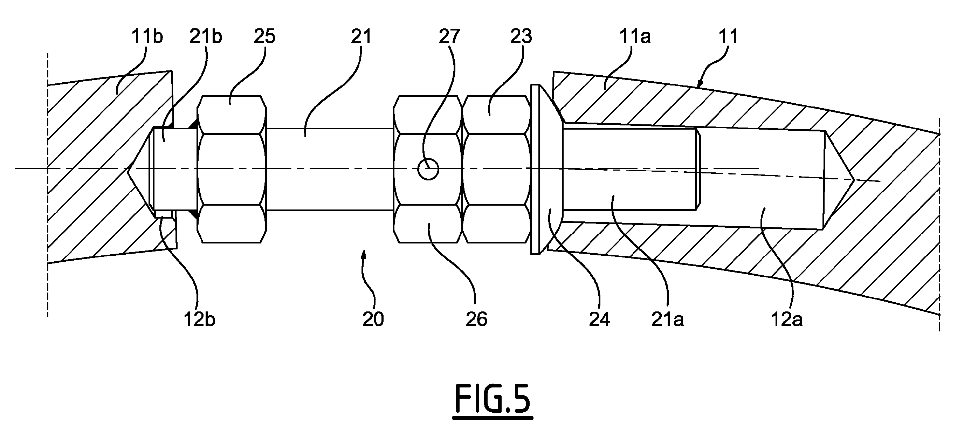

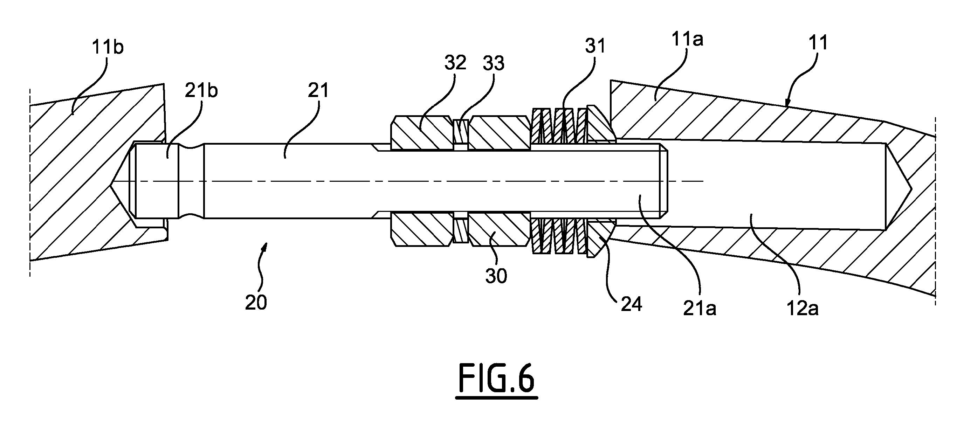

Ainsi que montré sur les Figs. 5 et 6, la tige est une tige filetée 21 insérée dans chaque trou borgne 12a et 12b des deux extrémités 11a et 11b du jonc 11.

Le système de serrage 20 comporte aussi des moyens de mise en précontrainte du jonc 11 et des moyens de blocage de ce jonc 11 dans la gorge 8 correspondante.

Selon un premier mode de réalisation représenté à la Fig. 5, les moyens de mise en précontrainte comprennent un écrou 23 vissé sur l'extrémité 21 a de la tige filetée 21 et destiné à coopérer avec l'extrémité 11a du jonc 11. Une rondelle de centrage 24 est interposée entre l'écrou 23 et l'extrémité 11a du jonc 11.

Un écrou 25 est soudé sur l'extrémité 21b de la tige filetée 21 afin d'entraîner en rotation cette tige filetée 21 lors de son vissage.

Les moyens de blocage comprennent un contre-écrou 26 vissé sur la tige filetée 21 entre les deux écrous, respectivement 23 et 25 et une goupille 27 de blocage de ce contre-écrou 26 dans une position appliquée contre l'écrou 23 après la mise en précontrainte du jonc 11 dans la gorge 8 correspondante.

Les extrémités 21a et 21b de la tige filetée 21 sont positionnées en regard respectivement des trous borgnes 12a et 12b et cette tige filetée 21 est insérée dans ces trous borgnes 12a, 12b. La tige filetée 21 est insérée de telle sorte que son extrémité 21 a vienne sensiblement au contact du fond du trou borgne 12a de façon à réduire le diamètre extérieur du jonc 11 pour le positionner en regard de la gorge 8 correspondante.

Ensuite, l'écrou 23 est entraîné en rotation pour que l'extrémité 21 a de la tige filetée 21 sorte progressivement du trou borgne 12a ce qui a pour effet d'augmenter le diamètre extérieur du jonc 11 et de le plaquer dans le fond de la gorge 8 correspondante.

Le jonc 11 est ainsi mis en précontrainte assurant un couplage mécanique déterminé entre ce jonc 11 et la roue 1. Le contre-écrou 26 est vissé pour venir s'appliquer contre l'écrou 23 et une goupille 27 est introduite dans un orifice traversant le contre-écrou 26 et la tige filetée 21.

Selon un second mode de réalisation représenté à la Fig. 6, les moyens de mise en précontrainte comprennent un écrou 30, vissé sur l'extrémité 21 a de la tige filetée 21 et au moins une rondelle élastique 31 interposée entre l'extrémité 11a du jonc 11 et l'écrou 30. De préférence, plusieurs rondelles élastiques 31 sont juxtaposées. Une rondelle de centrage 24 est interposée entre les rondelles élastiques 31 et l'extrémité 11a du jonc 11.

Dans ce mode de réalisation, les moyens de blocage comprennent un contre-écrou 32 vissé sur la tige filetée 21 et au moins une rondelle de blocage 33 interposée entre ce contre-écrou 32 et l'écrou 30.

Lors du positionnement du jonc 11 dans la gorge 8 correspondante, les extrémités 21a et 21b de la tige filetée 21 sont tout d'abord insérées dans les trous borgnes, respectivement 12a et 12b.

Ensuite la tige filetée 21 et l'écrou 30 sont entraînés en rotation l'un par rapport à l'autre pour que l'extrémité 21 a de ladite tige 21 sorte progressivement du trou borgne 12a afin d'augmenter le diamètre externe du jonc 11 et plaquer ce jonc 11 dans le fond de la gorge 8 correspondante.

L'écrou 30 est serré de façon à écraser les rondelles élastiques 31 et à générer une précontrainte de ce jonc dans la gorge 8. Le contre-écrou 32 est vissé contre l'écrou 30 en comprimant la rondelle 33 pour bloquer l'écrou 30.

Ainsi, un couplage mécanique déterminé entre ce jonc 11 et la roue 1 est obtenu.

Dans le cas de deux joncs 11 placés chacun dans une gorge 8 de part et d'autre de la toile 4, comme montré à la Fig. 3, les systèmes de serrage 20 sont diamétralement opposés.

Des mesures acoustiques montrent l'influence importante de la précontrainte entre le jonc 11 et la gorge 8 avec une valeur de précontrainte déterminée et optimale pour laquelle l'émission acoustique est minimale.

Sous l'effet de cette précontrainte, il se produit une augmentation de la rigidité qui conduit à un couplage progressif entre le jonc 11 et la roue 1. Il apparaît une transition d'un mode de roue vers un mode du système couplé.

L'amortissement du bruit de crissement est donc dû au couplage progressif du système roue/jonc avec modification de la rigidité en fonction du serrage du jonc.

Cette valeur de précontrainte ainsi que les paramètres de frottement sont influencés par les qualités dimensionnelles et de surface de la gorge 8 de la roue 1 ainsi que du jonc 11. Afin d'améliorer ces caractéristiques, un matériau visco-élastique est déposé à l'interface entre le jonc 11 et la gorge 8 de la roue 1 et ce matériau visco-élastique apporte un effet bénéfique sur la réduction du bruit de crissement par l'effet amortissant et par l'atténuation des écarts géométriques entre le jonc 11 et la gorge 8.

D'une manière générale, la valeur de précontrainte est réglée afin d'amortir les modes axiaux du voile 4 de la roue 1 à combattre en fonction du type de roue.

Avantageusement, la section transversale du jonc 11 présente un contour extérieur dont au moins une portion est en arc de cercle.

Selon un premier mode de réalisation représenté sur les Figs. 2 à 4, le jonc 11 présente une section circulaire.

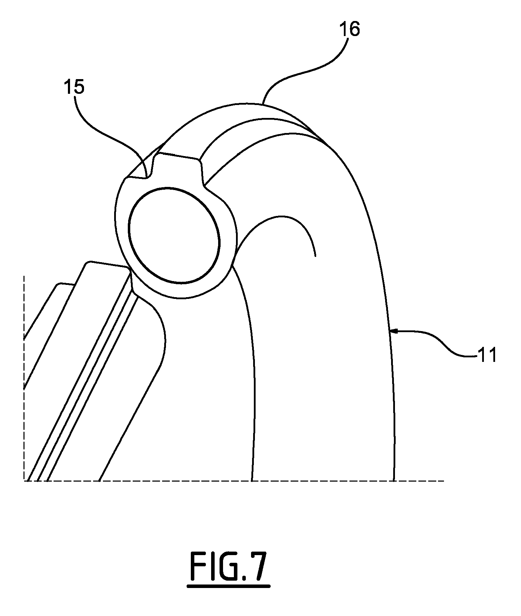

Selon un second mode de réalisation représenté à la Fig. 7, le jonc 11 comporte, sur son pourtour extérieur, une surface sensiblement plane 14 destinée à être insérée dans la gorge 8 correspondante.

La surface plane 14 est pourvue d'un rebord en saillie 16.

Le jonc à section circulaire est la forme de base. Il est important d'augmenter la masse si bien qu'un jonc de grosse section par exemple de 25 mm est mieux adapté. Cependant un jonc de plus gros diamètre entraîne une gorge plus profonde et vient affaiblir la section de la jante.

Une alternative est le jonc pourvu du rebord en saillie de façon à déplacer la masse souhaitée en dehors de la jante en limitant l'impact de la gorge sur l'intégrité de la roue.

Le dispositif d'amortissement selon l'invention permet de réduire l'émission du bruit de crissement d'une roue métallique sur une surface de roulement métallique et surtout d'optimiser les performances selon les types de roues.

## Revendications

1. Dispositif d'amortissement du bruit de crissement d'une roue métallique (1) en contact avec une surface de roulement métallique, comprenant au moins un jonc métallique (11) monté dans une gorge (8) ménagée dans le rayon intérieur de la jante (3) de la roue (1), ledit au moins un jonc métallique (11) comportant deux extrémités (11a, 11b) libres et opposées, reliées entre elles par un système de serrage (20) réglable dudit au moins un jonc (11) dans la gorge (8) correspondante pour assurer un couplage mécanique déterminé entre ce jonc (11) et la roue (1), **caractérisé en ce que** ledit au moins un jonc (11) métallique est monobloc et **en ce que** le jonc (11) comprend un premier trou borgne (12a) et un deuxième trou borgne (12b) formés dans le corps du jonc (11) dans des faces en regard des extrémités libres (11a, 11b) du jonc (11), et le système de serrage (20) comprend une tige (21) dont une extrémité (21 a) est insérée dans le premier trou borgne (12a) et l'autre extrémité (21 b) est insérée dans le deuxième trou borgne (12b).

2. Dispositif selon la revendication 1, **caractérisé en ce que** le système de serrage (20) comprend des moyens de mise en précontrainte dudit au moins un jonc (11) et des moyens de blocage de ce jonc (11) dans la gorge (8).

3. Dispositif selon la revendication 2, **caractérisé en ce que** la tige (21) est filetée, et les moyens de mise en précontrainte comprennent un écrou (23) vissé sur une première extrémité (21 a) de la tige (21) et destiné à coopérer avec une extrémité (11a) du jonc (11).

4. Dispositif selon l'une des revendications 2 ou 3, **caractérisé en ce que** la tige (21) est filetée, et les moyens de blocage comprennent un contre-écrou (26) vissé sur la tige filetée (21).

5. Dispositif selon la revendication 4, dans lequel les moyens de blocage comprennent une goupille de blocage (27) dudit contre-écrou (26) dans une position appliquée contre ledit écrou (23).

6. Dispositif selon la revendication 2, **caractérisé en ce que** la tige (21) est filetée, et les moyens de mise en précontrainte comprennent un écrou (30) vissé sur une première extrémité (21 a) de la tige filetée (21) et au moins une rondelle élastique (32) interposée entre ladite extrémité (11a) du jonc (11) et ledit écrou (30).

7. Dispositif selon les revendications 2 et 6, **caractérisé en ce que** les moyens de blocage comprennent un contre-écrou (32) libre en rotation, vissé sur la tige filetée (21) et au moins une rondelle de blocage (33) interposée entre ledit contre-écrou (32) et l'écrou (30).

8. Dispositif selon l'une quelconque des revendications 1 à 7, **caractérisé en ce qu'**un matériau viscoélastique est disposé à l'interface entre le jonc (11) et la gorge (8) de la roue.

9. Dispositif selon l'une quelconque des revendications 1à 8, **caractérisé en ce que** ledit au moins un jonc (11) présente une section circulaire.

10. Dispositif selon l'une quelconque des revendications 1 à 8, **caractérisé en ce que** ledit au moins un jonc (11) comporte, sur son pourtour extérieur, une surface (15) sensiblement plane destinée à être insérée dans la gorge (8) correspondante.

11. Dispositif selon la revendication 10, **caractérisé en ce que** la surface plane (15) comporte un rebord en saillie (16).

## Patentansprüche

1. Vorrichtung zum Dämpfen des Quietschgeräusches eines Metallrades (1) in Kontakt mit einer Metall-Lauffläche, aufweisend mindestens einen Metallring (11), der in einer Nut (8) montiert ist, die in dem Innenradius der Felge (3) des Rades (1) vorgesehen ist, wobei der mindestens eine Metallring (11) zwei freie und einander entgegengesetzte Enden (11a, 11b) aufweist, die über ein verstellbares Spannsystem (20) des mindestens einen Rings (11) in der korrespondierenden Nut (8) miteinander verbunden sind, um eine bestimmte mechanische Verbindung zwischen dem Ring (11) und dem Rad (1) zu gewährleisten, **dadurch gekennzeichnet, dass** der mindestens eine Metallring (11) aus einem Stück ist, und dass der Ring (11) ein erstes Sackloch (12a) und ein zweites Sackloch (12b) aufweist, die in dem Körper des Rings (11) in gegenüberliegenden Seiten der freien Enden (11a, 11b) des Rings (11) ausgebildet sind, und wobei das Spannsystem (20) einen Schaft (21) aufweist, dessen eines Ende (21a) in das erste Sackloch (12a) eingesetzt ist und dessen anderes Ende (21b) in das zweite Sackloch (12b) eingesetzt ist.

2. Vorrichtung gemäß Anspruch 1, **dadurch gekennzeichnet, dass** das Spannsystem (20) Mittel zum Vorspannen des mindestens einen Rings (11) und Mittel zum Arretieren des Rings (11) in der Nut (8) aufweist.

3. Vorrichtung gemäß Anspruch 2, **dadurch gekennzeichnet, dass** der Schaft (21) ein Gewinde hat und die Mittel zum Vorspannen eine Schraubenmutter (23) aufweisen, die auf ein erstes Ende (21a) des Schaftes (21) geschraubt ist und vorgesehen ist, um mit einem Ende (11a) des Rings (11) zusammenzuwirken.

4. Vorrichtung gemäß irgendeinem der Ansprüche 2 oder 3, **dadurch gekennzeichnet, dass** der Schaft (21) ein Gewinde hat und die Mittel zum Arretieren eine Gegenmutter (26) aufweisen, die auf den Gewindeschaft (21) geschraubt ist.

5. Vorrichtung gemäß Anspruch 4, wobei die Mittel zum Arretieren einen Stift (27) zum Arretieren der Gegenmutter (26) in einer gegen die Mutter (23) gedrückten Position aufweisen.

6. Vorrichtung gemäß Anspruch 2, **dadurch gekennzeichnet, dass** der Schaft (21) ein Gewinde hat und die Mittel zum Vorspannen aufweisen: eine Schraubenmutter (30), die auf ein erstes Ende (21a) des Gewindeschaftes (21) geschraubt ist, und mindestens eine Federscheibe (32), die zwischen dem Ende (11a) des Rings (11) und der Schraubenmutter (30) angeordnet ist.

7. Vorrichtung gemäß den Ansprüchen 2 und 6, **dadurch gekennzeichnet, dass** die Mittel zum Arretieren aufweisen: eine frei drehbare Gegenmutter (32), die auf den Gewindeschaft (21) geschraubt ist, und mindestens eine Arretierscheibe (33), die zwischen der Gegenmutter (32) und der Schraubenmutter (30) angeordnet ist.

8. Vorrichtung gemäß irgendeinem der Ansprüche 1 bis 7, **dadurch gekennzeichnet, dass** ein viskoelastisches Material an der Schnittstelle zwischen dem Ring (11) und der Nut (8) des Rades angeordnet ist.

9. Vorrichtung gemäß irgendeinem der Ansprüche 1 bis 8, **dadurch gekennzeichnet, dass** der mindestens eine Ring (11) einen kreisförmigen Querschnitt hat.

10. Vorrichtung gemäß irgendeinem der Ansprüche 1 bis 8, **dadurch gekennzeichnet, dass** der mindestens eine Ring (11) an seinem Außenumfang eine im Wesentlichen plane Fläche (15) aufweist, die vorgesehen ist, um in die korrespondierende Nut (8) eingesetzt zu sein.

11. Vorrichtung gemäß Anspruch 10, **dadurch gekennzeichnet, dass** die plane Fläche (15) einen hervorstehenden Rand (16) aufweist.

## Claims

1. Device for damping the squealing noise of a metal wheel (1) in contact with a metal running surface, comprising at least one metal ring (11) mounted in a groove (8) provided in the internal radius of the rim (3) of the wheel (1), said at least one metal ring (11) comprising two opposite free ends (11a, 11b), connected together by a system (20) for the adjustable clamping of said at least one ring (11) in the corresponding groove (8) in order to provide a determined mechanical coupling between this ring (11) and the wheel (1), **characterised in that** said at least one metal ring (11) is in a single piece and **in that** the ring (11) comprises a first blind hole (12a) and a second blind hole (12b) both formed in the body of the ring (11) in opposite faces of the free ends (11a, 11b) of the ring (11), and the clamping system (20) comprises a rod (21), one end (21a) of which is inserted in the first blind hole (12a) and the other end (21b) of which is inserted in the second blind hole (12b) .

2. Device according to claim 1, **characterised in that** the clamping system (20) comprises means for prestressing said at least one ring (11) and means for locking this ring (11) in the groove (8).

3. Device according to claim 2, **characterised in that** the rod (21) is threaded, and the prestressing means comprise a nut (23) screwed onto a first end (21a) of the rod (21) and intended to cooperate with one end (11a) of the ring (11).

4. Device according to one of claims 2 or 3, **characterised in that** the rod (21) is threaded, and the locking means comprise a locknut (26) screwed onto the threaded rod (21).

5. Device according to claim 4, in which the locking means comprise a pin (27) for locking said locknut (26) in a position applied against said nut (23).

6. Device according to claim 2, **characterised in that** the rod (21) is threaded and the prestressing means comprise a nut (30) screwed onto a first end (21a) of the threaded rod (21) and at least one elastic washer (32) interposed between said end (11a) of the ring (11) and said nut (30).

7. Device according to claims 2 and 6, **characterised in that** the locking means comprise a locknut (32) free to rotate, screwed onto the threaded rod (21), and at least one locking washer (33) interposed between said locknut (32) and the nut (30).

8. Device according to any one of claims 1 to 7, **characterised in that** a viscoelastic material is disposed at the interface between the ring (11) and the groove (8) in the wheel.

9. Device according to any one of claims 1 to 8, **characterised in that** said at least one ring (11) has a circular cross section.

10. Device according to any one of claims 1 to 8, **characterised in that** said at least one ring (11) comprises, on its external periphery, a substantially flat surface (15) intended to be inserted in the corresponding groove (8).

11. Device according to claim 10, **characterised in that** the flat surface (15) comprises a projecting rim (16).
